# EUROPEAN PATENT SPECIFICATION

(11) **EP 0 961 909 B1**
(45) Date of publication and mention of the grant of the patent: **03.01.2001**
(21) Application number: 98942649.9
(22) Date of filing: 29.07.1998
(51) Int. Cl.: F24F 1/02, F24F 13/22

(54) **BOX FOR THE FEEDING OF THE INNER UNITS OF AIR-CONDITIONING SYSTEMS**
KASTEN ZUR VERSORGUNG VON INNENRAUMEINHEITEN EINER KLIMAANLAGE
BOITIER DESTINE A L'INSTALLATION DES COMPOSANTS INTERNES DES SYSTEMES D'AIR CONDITIONNE

(30) Priority: 31.07.1997 IT VI970049 U
(43) Date of publication of application: 08.12.1999
(73) Proprietor: Pignolo, Nicola, 36100 Vicenza (IT)
(72) Inventor: Pignolo, Nicola, 36100 Vicenza (IT)
(74) Representative: Bonini, Ercole
(86) International application number: PCT/EP98/04724
(87) International publication number: WO 99/06773

(56) References cited:
- PATENT ABSTRACTS OF JAPAN vol. 097, no. 010, 31 October 1997 & JP 09 159201 A (MIRAI IND CO LTD;OSAKA GAS CO LTD), 20 June 1997
- PATENT ABSTRACTS OF JAPAN vol. 097, no. 009, 30 September 1997 & JP 09 126490 A (TOKYO GAS CO LTD), 16 May 1997

## Description

The present invention concerns a built-in box particularly suitable for facilitating the connection of the inner units of air-conditioning systems to the refrigerating pipes that feed the inner units themselves and to the condensate draining pipe.

At present, in the construction of residential buildings, the raceways for the air-conditioning system are carried out more and more frequently besides the raceways with chase for the traditional systems, like the electric and water supply systems.

Said raceways comprise some built-in boxes that serve as terminal connection points for the air-conditioning units positioned inside the different rooms.

The built-in boxes used at present are manufactured through the moulding of thermoplastic material and do not differ from the standard boxes used also for other types of systems, like the connector blocks of the electrical systems, except for their dimensions, which must be suitable for those of the bracket to be used for the anchorage of the inner air-conditioning units.

At present, the built-in boxes for air-conditioning systems receive three pipes, two of which are the delivery and return pipes of the refrigerating unit, while the third one serves to drain the condensate water. The three pipes are built in the wall and they reach the box through holes made on the side or lower edges of the box itself.

*The JP 09 126490 A discloses a box body to be associated to a wall hang type air-conditioner. Said box body is located at the side face side of the air-conditioner main body with the purpose to implement the work of connecting the pipes of said air-conditioner.*

A first drawback of the known boxes concerns the correct positioning and anchorage to the wall of the rear bracket with which each inner air-conditioning unit is provided. In fact, finding the ideal position of this bracket is not so simple as it may seem to the inexpert installer, since it requires considerable skill. This is also due to the fact that it is necessary to work in reduced spaces during the operations necessary for the connection of the inner units to the refrigerating pipes and to the condensate draining pipe, which are previously laid in chases.

However, the greatest risk involved in the incorrect positioning of the inner air-conditioning units is represented by the fact that «siphon effects» may involuntarily be produced in the draining pipe of the condensate that forms in each one of said air-conditioning units, thus comprimising their correct operation.

The main aim of the present invention is the implementation of a built-in box designed to be usefully employed for the installation of the inner units of air-conditioning systems, thus facilitating the "wall"- connection of the unit themselves.

Another aim of the invention is the implementation of a box that facilitates the continuous draining of condensate, thus avoiding the risk of incorrect operation of the air-conditioning units due to the above mentioned siphon effect

The above mentioned goals have been achieved through the implementation of a built-in box for the feeding of the inner units of air-conditioning systems, which, according to-the main claim, is characterized in-that it comprises:
- a hollow element substantially shaped as a parallelepiped, said hollow element having open base and a side wall provided with a plurality of ribs;
- a small tank for the drainage of the condensate, said tank being positioned in correspondence with the open base of said hollow element and being provided with at a least a section of pipe connecting it to the appropriate draining pipe of the building main system;
- a substantially flat cover that can be fixed to the edge of the tank.

According to a favourite application of the invention, the built-in box is moulded in two distinct pieces, the first one of which constitutes the parallelepiped-shaped hollow element without base, while the second one constitutes the condensate drainage tank positioned in correspondence with said lower base and coupled to said hollow element

According to another application of the invention, the condensate drainage tank constitutes the lower part of a single moulded piece that makes up the entire box itself.

The goals and advantages described above will be better highlighted in the description of a favourite application among many of the invention in question, illustrated in the enclosed drawings, wherein:
- Fig. 1 is a perspective global view of the box object of the invention with the front dosing cover separated from it;
- Fig. 2 is a front view of the open box;
- Fig. 3 is a side, partially sectional view of the box built in a wall, with the coupling bracket of the air-conditioning unit positioned over it, said air-conditioning unit being represented with a broken line in the pipe connection phase;
- Fig. 4 is a front view of the built-in box, comprising the bracket supporting the air-conditioning unit

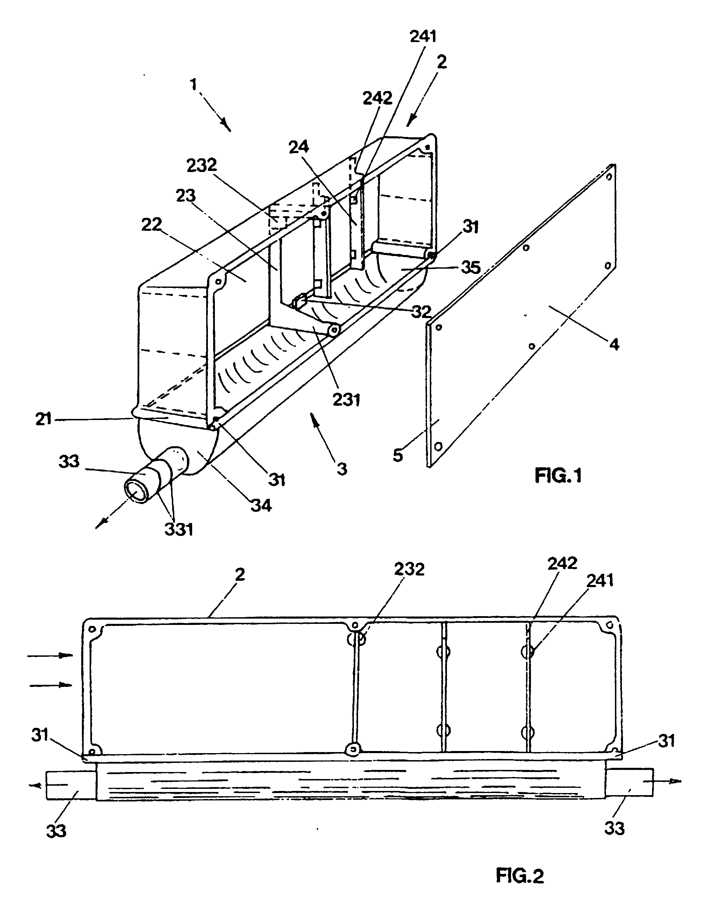

As shown in Figures 1 and 2, the box object of the invention, indicated as a whole by 1, comprises the hollow element 2, which substantially has the shape of a parallelepiped without lower base. The semicylindrical tank 3 is positioned in correspondence with said lower base, said tank 3 being laterally anchored to the lower edges 21 of the sides of said hollow element 2 and being therefore in communication with said hollow element 2 itself.

Said tank 3 is also coupled to the side wall 22 of said hollow element 2 through coupling means provided on the lower edge of the bottom itself and cooperating with the means 32 provided on the rear edge of the tank.

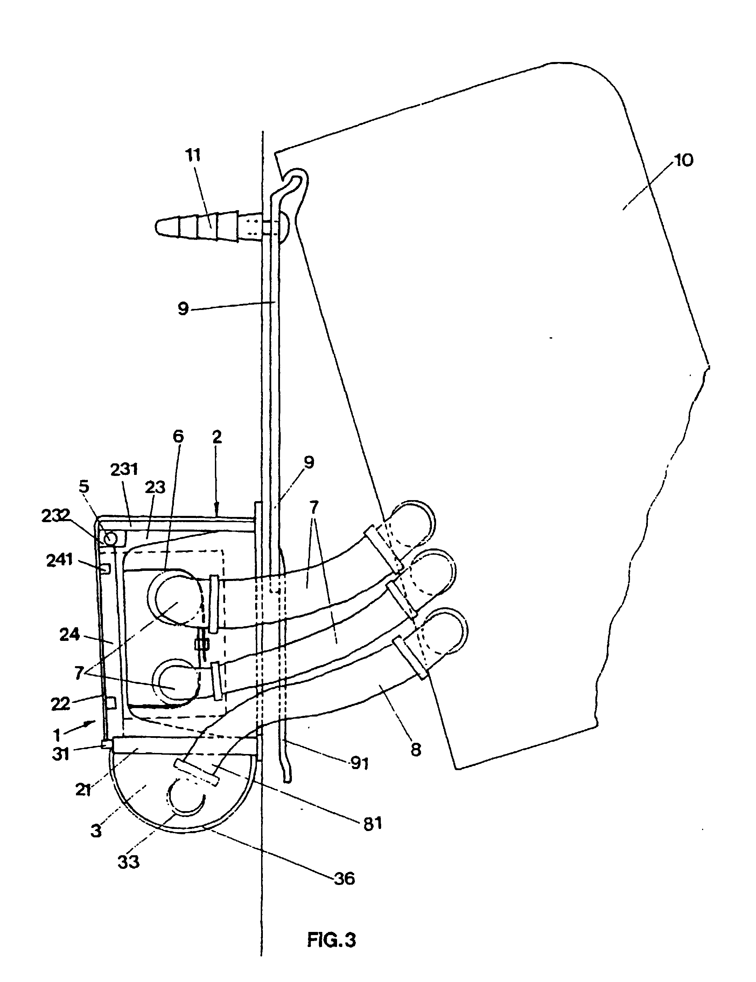

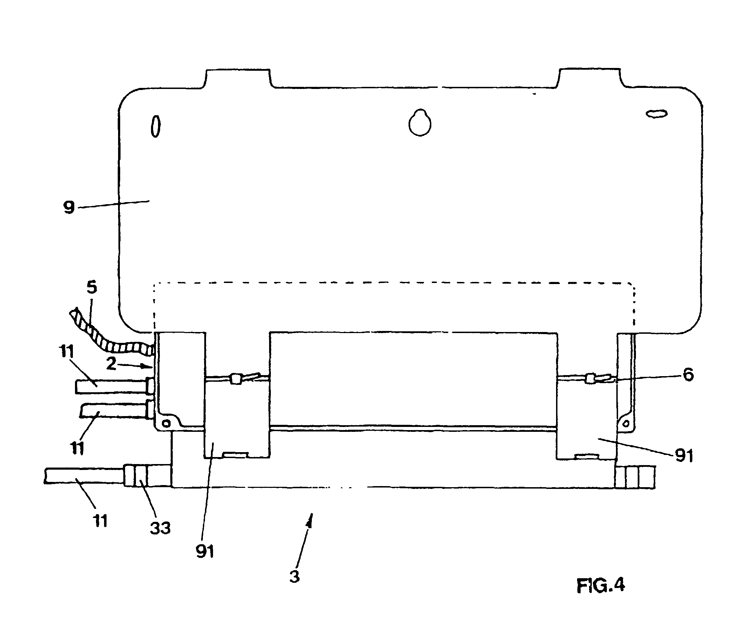

Said side wall 22 comprises a central rib 23 that stiffens the hollow element 2 and whose ends are provided with coupling elements 231 of the self-threading screws for the fastening of the box cover 4 (Fig. 1) and with an opening 232 for the passage of the air-conditioner electric cable 5 (Figures 3 and 4).

The same side wall 22 comprises also a plurality of other ribs 24 provided with transversal holes 241 to which it is possible to couple the locking damps 6 (Figures 3 and 4) of the refrigerating pipes 7 and of the condensate draining pipe 8 and the bracket 9 of the air-conditioner 10.

Said ribs 24 are also provided, in their upper part, with seats 242 for the positioning of the electric cable 5 that crosses the box, as shown in of Figure 4.

The tank 3 for the drainage of the condensate that continually forms during the operation of each unit of the air-conditioning system is preferably carried out separately from the hollow element 2 and comprises the lateral coupling means 31 that can be inserted in the above mentioned shaped edges 21 of the hollow element and the rear coupling means 32.

Said tank 3 comprises an element 33 for the connection to the condensate draining pipe 6 (Fig. 4). Said element will preferably have the shape of a pipe section positioned in correspondence with both the flat side surfaces 34 and 35 of the tank itself and will be provided with seals 331.

The connection element 33 comprises a hole that is made blind by an interposed diaphragm 332 that can be easily broken through in order to ensure the drainage towards one of the tank sides, or to permit the communication on both sides if it is necessary to collect the condensate produced by more air-conditioning units connected in series and let if flow towards a single condensate draining pipe 8.

As shown in Figures 3 and 4, the particular configuration of the box object of the invention considerably simplifies the application of the air-conditioning unit support bracket 9 to a wall of the room to be provided with air conditioning and its correct positioning with respect to the box 1 previously built in the wall itself.

In fact, it is sufficient to use a single screw anchor 11 (Fig. 3), whose screw fastens the bracket 9 centrally, in the most suitable position in relation to the space necessary for the exit from the box of the refrigerating pipes 7 to be connected to the corresponding pipes of the air-conditioning unit 10.

Said outlet (exit) can be positioned laterally (usually on the left, as shown in Fig. 4) with respect to the pair of protrusions 91 belonging to the bracket 9, or centrally with respect to said protrusions themselves. In any case, the anchorage of said protrusions 91 to the ribs 24 on the box side wall by means of the damps 6 is considerably facilitated.

Also the connection of the refrigerating pipes of the main system to the corresponding pipes 7 of the air- conditioning unit 10 can be carried out more comfortably by the operator, since the bracket 9 is already fixed to the box 1 and the upper part of the air-conditioning unit is coupled to the bracket (Fig. 3), while its lower part is sufficiently detached from the wall to make it possible to carry out the operations described above.

As shown in Figure 3, it is important to observe that the condensate draining pipe 8 belonging to the air- conditioning unit 10 is always positioned below the refrigerating pipes 7. The operator simply has to lay its open end 81 on the bottom 36 of the tank 3, which will thus serve as connection element to the fixed drain pipe 11 previously laid in a chase together with the box 1.

Since the position of the tank 3 is in any case lower than the inlet of the refrigerating pipes 7 in the built-in box, the siphon effect described above will-certainly be avoided, which is the greatest advantage offered by the box object of the invention.

A further advantage of the box object of the invention is represented by the fact that its condensate drainage tank can serve as through element in the series connection of several inner air-conditioning units to a single final draining pipe. It is also important to point out that the box has two opposite connection elements 33 for the drainage of the condensate and that since each connection element is originally provided with a blind hole 332, it is possible to select the element to be connected to the drain unit according to the built-in system already arranged on the right or on the left of the box.

The above description clearly demonstrates that the box object of the invention actually achieves the set goals.

Obviously, the combination of the two pieces making up the box and their mutual coupling means can differ from those described above, like the shapes and dimensions of some components of these pieces themselves.

It is also obvious that the same advantages can be achieved also with a box carried out in a single piece, having in any case the front access opening higher than the base, which will be shaped as a tank for the collection and drainage of the condensate towards the appropriate pipe.

Any variant of the box object of the invention is therefore to be considered as protected by the present invention.

## Claims

1. Built-in box (1) for the feeding of the inner units of air-conditioning systems, **characterized in that** it comprises:
- a hollow element (2) substantially shaped as a parallelepiped, said hollow element having open base and a side wall (22) provided with a plurality of ribs (24);
- a small tank (3) for the drainage of the condensate, said tank being positioned in correspondence with the open base of said hollow element (2) and being provided with at least a section of pipe (33) connecting it to the drain pipe (6) of the building main system;
- a substantially flat cover (4) that can be fixed to the edge of the tank

2. Built-in box (1) according to claim 1, **characterized in that** the tank (3) is provided with two opposite pipe sections (33) for the connection with the drain pipe, each section being provided with a diaphragm (332) suitable for being broken through in order to permit the drainage of the condensate in the drain pipe.

3. Built-in box (1) according to claim 1, **characterized in that** said ribs (24) are provided with transversal holes (241) suitable for housing flexible anchorage means.

4. Built-in box (1) according to claim 1 or 2, **characterized in that** each one of said ribs (24) is provided with a seat (242) on its upper part, said seats being aligned according to a substantially horizontal line and being suitable for housing the electric cable of the air-conditioning unit

5. Built-in box (1) according to any of the previous claims, **characterized in that** said hollow element (2) and said tank (3) are carried out separately and comprise lateral (21, 31) and rear (32) coupling means suitable for connecting said hollow element to said tank

6. Built-in box (1) according to any of the previous claims, **characterized in that** said tank (3) is substantially semicylindrical.

## Patentansprüche

1. Eingebautes Gehäuse (1) für die Versorgung der internen Einheiten von Klimaanlagen, **dadurch gekennzeichnet, dass** es folgendes umfasst:
- ein im Wesentlichen als Parallelepiped geformtes, hohles Element (2), das eine offene Basis und eine Seitenwand (22) mit einer Vielzahl von Rippen (24) aufweist;
- einen kleinen Behälter (3) für die Kondenswasserdränage, wobei dieser Behälter in Entsprechung mit der offenen Basis des Hohlelements (2) positioniert ist und wenigstens einen Schlauchabschnitt (33) aufweist, der ihn mit dem Dränageschlauch (6) des Gebäude-Hauptsystems verbindet;
- einen im Wesentlichen flachen Deckel (4), der am Behälterrand befestigt werden kann.

2. Eingebautes Gehäuse (1) gemäß Patentanspruch 1, **dadurch gekennzeichnet, dass** der Behälter (3) mit zwei einander entgegengesetzten Schlauchabschnitten (33) für die Verbindung mit dem Dränageschlauch versehen ist, wobei jeder Abschnitt eine Membran (332) aufweist, die durchbrochen werden kann, um die Dränage des Kondenswassers im Dränageschlauch zuzulassen.

3. Eingebautes Gehäuse (1) gemäß Patentanspruch 1, **dadurch gekennzeichnet, dass** die Rippen (24) Querlöcher (241) aufweisen, um flexible Verankerungssysteme aufzunehmen.

4. Eingebautes Gehäuse (1) gemäß Patentanspruch 1 oder 2, **dadurch gekennzeichnet, dass** jede der Rippen (24) an ihrem oberen Teil mit einer Aufnahme (242) versehen ist, wobei diese Aufnahmen gemäß einer im Wesentlichen waagerechten Linie ausgerichtet sind und geeignet sind, das Stromkabel der Klimaanlage aufzunehmen.

5. Eingebautes Gehäuse (1) gemäß jedem der vorstehenden Patentansprüche, **dadurch gekennzeichnet, dass** das hohle Element (2) und der Behälter (3) separat ausgeführt sind und seitliche (21, 31) sowie hintere (32) Kupplungen umfassen, um das hohle Element mit dem Behälter zu verbinden.

6. Eingebautes Gehäuse (1) gemäß jedem der vorstehenden Patentansprüche, **dadurch gekennzeichnet, dass** der Behälter (3) im Wesentlichen halbzylindrisch ist.

## Revendications

1. Une boîte à encastrement (1) pour l'alimentation des unités internes des installations de conditionnement, **caractérisée en ce qu**'elle comprend :
- un élément creux (2) essentiellement ayant la forme d'un parallélépipède, ledit élément creux ayant une base ouverte et une paroi latérale (22) équipée d'une pluralité de nervures (24) ;
- un petit réservoir (3) pour le drainage de l'eau de condensation, ledit réservoir étant positionné à la hauteur de la base ouverte dudit élément creux (2) et étant équipé d'au moins un morceau de tuyau (33) reliant celui-ci au tuyau de drainage (6) de l'installation principale du bâtiment ;
- un couvercle essentiellement plat (4) qui peut être fixé au bord du réservoir.

2. Une boîte à encastrement (1) selon la revendication 1, **caractérisée en ce que** le réservoir (3) est équipé de deux morceaux de tuyau opposés (33) pour le raccordement avec le tuyau de drainage, chaque morceau étant muni d'un diaphragme (332) indiqué pour être pénétré afin de permettre le drainage de l'eau de condensation dans le tuyau de drainage.

3. Une boîte à encastrement (1) selon la revendication 1, **caractérisée en ce que** lesdites nervures (24) sont équipées de trous transversaux (241) indiqués pour loger des moyens flexibles d'ancrage.

4. Une boîte à encastrement (1) selon la revendication 1 ou 2, **caractérisée en ce que** chacune desdites nervures (24) est équipée d'un siège (242) se trouvant sur la partie supérieure de celle-ci, lesdits sièges étant alignés sur une ligne essentiellement horizontale et étant indiqués pour loger le câble électrique de l'unité de conditionnement d'air.

5. Une boîte à encastrement (1) selon une quelconque des revendications ci-dessus, **caractérisée en ce que** ledit élément creux (2) et ledit réservoir (3) sont réalisés séparément et comprennent des moyens d'accouplement latéraux (21, 31) et arrière (32) indiqués pour relier ledit élément creux audit réservoir.

6. Une boîte à encastrement (1) selon une quelconque des revendications ci-dessus, **caractérisée en ce que** ledit réservoir (3) est essentiellement demi-cylindrique.
